# FASCICULE DE BREVET EUROPEEN

(11) **EP 0 768 730 B1**
(45) Date de publication et mention de la délivrance du brevet: **09.08.2000**
(21) Numéro de dépôt: 96402122.4
(22) Date de dépôt: 07.10.1996
(51) Int. Cl.: H01R 13/04, H01R 25/16, B60Q 1/26

(54) **Circuit électrique à au moins une bande découpée, notamment pour un ensemble de feux de signalisation d'un vehicule automobile, comportant au moins un élément de connexion mâle réalisé par pliage**
Elektrische Schaltung aus mindestens einem Band hergestellt, insbesondere für Fahrzeuganzeigelampen, mit mindestens einem Steckelement das durch Biegen hergestellt wurde
Electrical circuit made of at least one strip, especially for signalling lamps of a vehicle, comprising at least one male element made by bending

(30) Priorité: 09.10.1995 FR 9511852
(43) Date de publication de la demande: 16.04.1997
(73) Titulaire: VALEO VISION, 93000 Bobigny (FR)
(72) Inventeur: Rives, Claude, 27930 Aviron (FR)
(74) Mandataire: Le Forestier, Eric

(56) Documents cités:
- EP-A- 0 230 833
- US-A- 2 835 959
- US-A- 3 742 432
- US-A- 5 027 262

## Description

La présente invention concerne, d'une façon générale, un feu de signalisation de véhicule automobile, équipé d'un circuit découpé fixé sur son porte-lampes pour la connexion des diverses douilles de lampes à un connecteur d'alimentation électrique desdites lampes.

Classiquement, un tel circuit découpé comprend plusieurs bandes qui, en certains endroits, sont repliées sur elles-mêmes de manière à former des parties mâles de connexion, destinées à coopérer avec un connecteur équipé de contacts femelles.

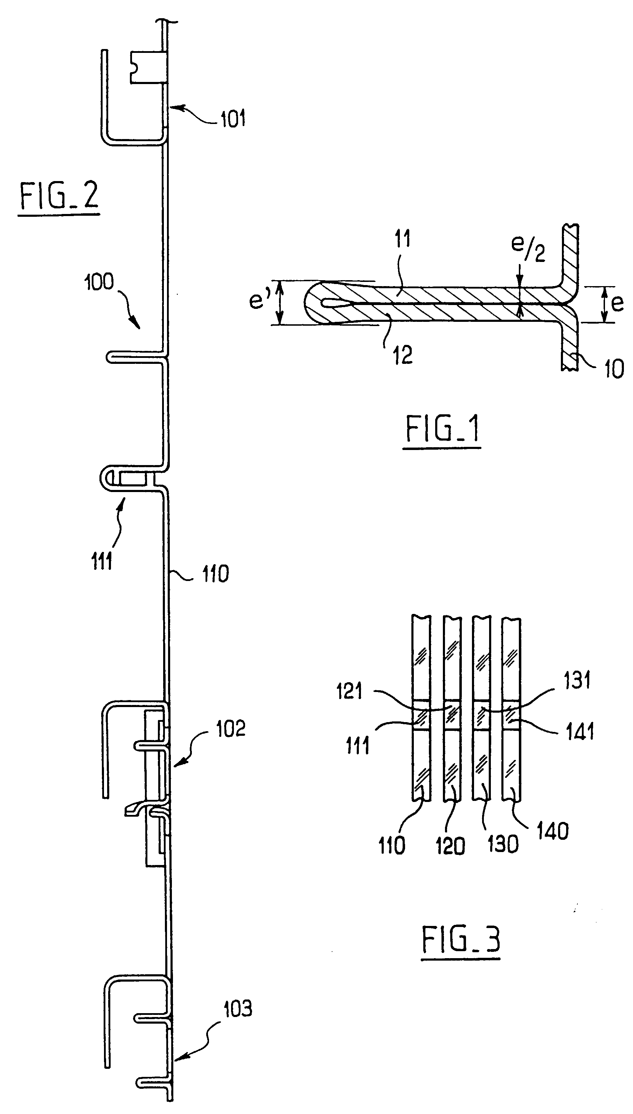

On a représenté sur la figure 1, en coupe transversale, la zone de pliage d'un tel circuit découpé. Il s'agit de deux branches 11, 12 de la bande 10, repliées à environ ou strictement 90° par rapport au plan de la bande et repliées à 180° l'une contre l'autre, pour former une languette de contact mâle.

Pour assurer un bon contact électrique avec le connecteur femelle associé, il est nécessaire que l'épaisseur de la languette mâle soit aussi bien déterminée que possible. Ainsi, pour obtenir une languette d'épaisseur e, on choisit pour la tôle à partir de laquelle le circuit découpé est réalisé une épaisseur égale à e/2.

Mais du fait même du pliage terminal à 180°, il se crée à l'extrémité libre de la languette une surépaisseur, notée e', qui force les côtés du connecteur femelle associé à s'écarter lors du branchement.

Ceci conduit principalement à deux risques. Tout d'abord, il est possible que le connecteur femelle ne soit en contact avec la languette qu'en deux points situés de part et d'autre de cette surépaisseur, et ces contacts ponctuels peuvent créer des phénomènes indésirables tels qu'un échauffement ou une corrosion. En outre, l'écartement des côtés du connecteur femelle nécessaire pour franchir la surépaisseur peut amener à dépasser la limite élastique du matériau du connecteur, ce qui a pour effet de diminuer la force de pincement du connecteur femelle sur la languette mâle et d'aboutir à des pertes de contact.

On observera que, pour diminuer autant que possible la surépaisseur, on peut laminer ou estamper l'extrémité libre de la languette pour presser les deux branches 11, 12 l'une contre l'autre, mais cela crée un risque d'apparition de criques à l'extrémité libre de la languette, et donc sa fragilisation.

Le document US-2 835 959 décrit une languette avec deux branches repliées à 180°, les bords de chaque branche étant repliés en direction de l'autre branche de sorte que les sommets de ces bords sont en contact et en butée l'un contre l'autre. Toutefois, ce dispositif a pour inconvénient qu'il nécessite une découpe et un positionnement très précis de chacun des bords en vue d'obtenir un bon contact des sommets entre eux. De plus, cette disposition des sommets n'est pas stable en soi : lors de l'utilisation, un choc par exemple latéral sur l'une des branches risque fort d'entraîner le décalage relatif des sommets et le rapprochement consécutif des branches entre elles. Cela réduit alors l'épaisseur de la languette et peut menacer la qualité de la fixation de la languette par serrage dans l'organe femelle associé.

La présente invention vise à pallier ces inconvénients de l'état de la technique et à proposer une languette de contact mâle qui, tout en étant réalisée par pliage de deux branches à 180° l'une en face de l'autre, ne présente pas de surépaisseur indésirable en bout, soit facile à fabriquer, et soit relativement robuste.

La présente invention concerne tout d'abord un circuit électrique à au moins une bande découpée, notamment pour un ensemble de feux de signalisation de véhicule automobile, du type réalisé par découpage dans une tôle conductrice et comprenant des moyens pour la connexion électrique avec au moins un organe électrique tel qu'une lampe et au moins une languette mâle destinée à coopérer avec un connecteur femelle pour l'alimentation électrique dudit organe, la languette étant réalisée dans la continuité d'une bande conductrice du circuit et comportant deux branches présentant chacune une face plane, les deux branches étant pliées à 180° avec les faces planes parallèles et en regard l'une de l'autre, au moins l'une des branches comportant une partie latérale pliée perpendiculairement à la face plane pour être en saillie vers l'autre branche, cette partie présentant un sommet en contact avec l'autre branche et constituant une butée lors du pliage des deux branches à 180° de manière à donner une épaisseur essentiellement constante à la languette, l'épaisseur maximale de la tôle au moins dans la région de la languette étant inférieure à la moitié de l'épaisseur nominale de la languette, dans lequel les branches sont agencées de sorte que le sommet de la partie latérale est en contact avec la face plane de l'autre branche.

Ainsi, le positionnement relatif des deux branches est stable et robuste. On réduit considérablement les risques de rapprochement des branches, ce qui préserve l'épaisseur de la languette. De plus, le positionnement des parties latérales est simple à effectuer.

Avantageusement, la partie latérale a une dimension perpendiculairement à la face plane, une fois la partie latérale repliée, supérieure à deux fois l'épaisseur de la tôle dans la région de la languette.

On peut donc donner à la languette une épaisseur très supérieure à l'épaisseur de la tôle. En retour, on peut choisir une tôle très peu épaisse par rapport à l'épaisseur de languette souhaitée, en vue de réaliser une économie de matière.

Avantageusement, la partie latérale est une patte s'étendant à partir d'un bord de la face plane, la patte ayant une dimension suivant ce bord inférieure à la dimension de cette face suivant ce bord.

On réalise ainsi une économie de matière.

Avantageusement, la languette comporte au moins deux pattes latérales ayant des faces s'étendant en regard l'une de l'autre une fois repliées.

Avantageusement, la languette comporte quatre pattes latérales ayant des faces s'étendant deux à deux en regard l'une de l'autre une fois repliées.

Avantageusement, chaque branche comporte deux pattes latérales, les pattes de l'une des branches étant proches d'une extrémité libre de la languette une fois repliée et les pattes de l'autre branche étant distantes de cette extrémité libre.

Avantageusement, au moins l'une des branches comporte deux pattes latérales s'étendant symétriquement de part et d'autre de la branche.

Avantageusement, pour la ou chaque patte latérale, la branche associée présente deux fentes s'étendant dans le prolongement de deux arêtes de la patte.

Ainsi, le sommet de la patte vient en contact avec la face plane de l'autre branche, notamment lorsque les deux faces ont mêmes formes et dimensions.

L'invention propose également un ensemble de feux de signalisation de véhicule automobile, qui comprend un voyant et un circuit électrique à au moins une bande découpée selon l'invention.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la figure 1 est une vue en coupe d'une languette de contact mâle selon l'art antérieur;
- la figure 2 est une vue d'ensemble en coupe longitudinale d'un circuit découpé selon l'invention destiné à être monté sur un porte-lampes d'un bloc de feux de signalisation d'un véhicule automobile;
- la figure 3 est une vue en plan partielle du circuit découpé de la figure 2;
- la figure 4 est une vue en perspective d'une languette de contact mâle selon l'invention avant pliage ; et
- la figure 5 est une vue en perspective de la languette de la figure 4 après pliage.

En référence aux figures 2 et 3, on a représenté un circuit découpé 100 qui comprend une pluralité de bandes conductrices, en l'espèce quatre bandes 110, 120, 130 et 140 qui localement présentent un pliage de manière à définir quatre languettes mâles 111, 121, 131 et 141 généralement alignées (figure 3) et destinées à recevoir un connecteur femelle de manière à assurer l'alimentation électrique des diverses lampes.

En l'occurrence, le circuit découpé 100 comporte trois ouvertures 101, 102, 103 pour des lampes, et des pattes de connexion et de verrouillage associées. La construction d'un tel circuit découpé est classique et ne sera pas décrite plus en détail.

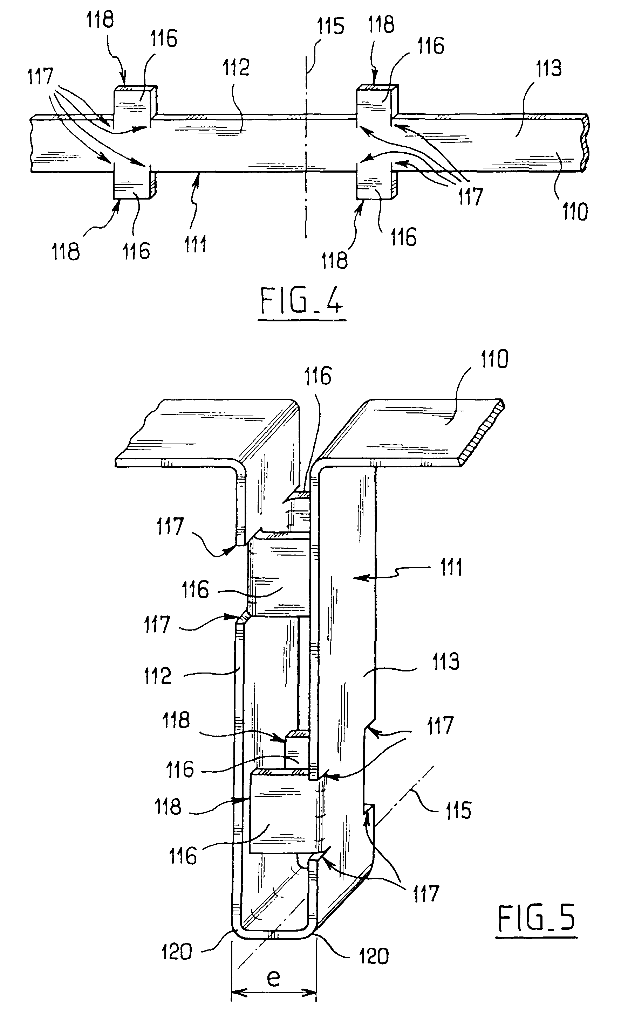

En référence maintenant aux figures 4 et 5, on a représenté en détail l'une des quatre languettes de contact mâles 111. Celle-ci, comme dans l'art antérieur, est réalisée dans la continuité de la bande 110. La languette comporte deux branches 112, 113 présentant chacune une face plane. La languette est réalisée par pliage à 180° l'une en face de l'autre des deux branches 112, 113 qui se rejoignent à une ligne médiane 115, ces deux branches étant reliées au reste de la bande par pliage à 90°. Les deux faces planes sont alors parallèles et en regard l'une des l'autre. Chaque face des branches 112, 113 est délimitée latéralement par deux bords rectilignes parallèles entre eux.

En référence à la figure 5, la languette 111 présente une épaisseur nominale e.

Selon l'invention, l'épaisseur maximale de la tôle de métal, à partir de laquelle le circuit découpé est réalisé, est, au moins dans la région de la languette, inférieure à e/2. De préférence, l'épaisseur maximale de la tôle est très inférieure à e/2, par exemple inférieure à e/4.

Chaque branche 112, 113 comporte deux parties latérales, ici deux pattes latérales 116 de forme rectangulaire s'étendant à partir des bords rectilignes respectifs de la face, réalisées par découpe lors du découpage de la tôle dans la continuité de la face de la branche et disposées symétriquement de part et d'autre de la face de la branche. Avant pliage de la bande en référence à la figure 4, ces pattes 116 s'étendent dans le plan de la bande conductrice. Lors du pliage de la bande en référence à la figure 5, chaque patte latérale est repliée à sa base perpendiculairement à la face de la branche qui la porte pour être en saillie vers l'autre face de la branche et définir une butée lors du pressage des deux branches 112, 113 l'une en face de l'autre.

Chaque patte latérale 116 présente un sommet 118 rectiligne distant et opposé au bord rectiligne de la face de la branche qui porte la patte, et parallèle à celui-ci. Ce sommet 118 vient en contact et en butée avec la face plane de l'autre branche, parallèlement à celle-ci, en réalisant un contact linéaire suivant l'épaisseur de la patte et la longueur de ce sommet.

Les deux pattes latérales 116 de chaque branche ont des faces planes s'étendant en regard l'une de l'autre une fois repliées.

Pour faire en sorte que les butées soient convenablement réparties, les pattes 116 de la branche 112 sont éloignées de la ligne médiane 115 et les pattes 116 de l'autre branche 113 sont proches de la ligne médiane. Après pliage de la languette, les deux paires de pattes sont ainsi décalées longitudinalement, les pattes de la branche 113 étant proches de l'extrémité libre de la languette au contraire des pattes de la branche 112 qui sont distantes de cette extrémité libre.

Chaque patte 116 présente deux arêtes latérales rectilignes parallèles entre elles et s'étendant depuis le sommet 118 de la patte jusqu'au bord rectiligne de la face de la branche portant la patte. Pour chaque patte latérale 116, la branche associée présente avant pliage deux fentes 117 s'étendant dans la branche dans le prolongement des arêtes latérales respectives de la patte. Ainsi, lorsque la patte 116 est repliée perpendiculairement à la branche qui la porte, le sommet 118 de la patte se trouve naturellement en regard de la face de l'autre branche, ce qui permet d'obtenir l'effet de butée. Au contraire, en l'absence des fentes 117 lorsque les faces ont même forme et même dimensions, pour obtenir l'effet de butée, il faudrait replier la patte d'un angle supérieur à 90°, ce qui serait désavantageux puisque sous la pression des branches, la patte pourrait se replier complètement à plat sur la branche qui la porte.

Chaque patte latérale 116 a une dimension suivant le bord rectiligne de la face de la branche 112, 113 qui la porte, en l'espèce une largeur, qui est inférieure à la dimension de cette face suivant ce bord, en l'espèce la longueur de la branche et de la languette. Avantageusement, cette largeur de la patte 116 sera inférieure à la moitié, voire au quart de cette longueur de la branche.

La dimension de chaque patte 116 perpendiculairement à la face de la branche depuis l'extrémité des fentes 117 jusqu'au sommet 118, une fois la patte repliée, en l'espèce la longueur de la patte, est sensiblement égale à l'épaisseur nominale e diminuée de l'épaisseur de la tôle. Cette dimension est avantageusement supérieure à deux fois, voire quatre fois l'épaisseur de la tôle.

Lorsque les deux branches 112, 113 sont repliées l'une en face de l'autre, la venue des sommets 118 des pattes en contact intérieurement contre la face de la branche en vis-à-vis permet de laisser entre les deux branches, au voisinage de l'extrémité libre de la languette, un espace qui est compatible avec l'aptitude au pliage de la tôle. De la sorte, il n'existe aucune surépaisseur de la languette dans la région de son extrémité libre. Celle-ci n'est pas sollicitée excessivement et donc le risque d'apparition de criques ou de fissures est minimisé. La languette présente globalement une épaisseur uniforme sur toute son étendue. Cette uniformité est favorisée par le décalage longitudinal des deux paires de pattes latérales 116. Lorsque l'épaisseur nominale e de la languette est très supérieure à l'épaisseur de la tôle, on pourra délimiter l'extrémité libre de la languette au moyen de deux plis parallèles 120 chacun d'environ 90°, pour donner un profil rectangulaire à cette extrémité libre et ainsi prolonger au maximum la surface plane des branches servant au contact avec le connecteur femelle.

Le circuit électrique qui vient d'être décrit peut notamment faire partie d'un ensemble de feux de signalisation de véhicule automobile (non représenté) comprenant par ailleurs un voyant, le circuit électrique étant monté sur un porte-lampes ou sur la face arrière d'un socle.

Bien entendu, on pourra apporter à l'invention de nombreuses modifications sans sortir du cadre de celle-ci.

Le circuit électrique pourra comporter une seule bande conductrice.

Bien que cela soit généralement moins avantageux, la languette pourra comporter seulement une, deux ou trois pattes latérales. Si la languette comporte au moins deux pattes latérales, celles-ci pourront ne pas s'étendre en regard l'une de l'autre mais au contraire être décalées le long de la languette. Le contact de la patte avec la branche opposée ne sera pas nécessairement linéaire comme ci-dessus. Il pourra être ponctuel si on donne par exemple une forme en arc de cercle au sommet de la patte. Il pourra aussi s'agir d'un contact surface contre surface si le sommet de la patte est constitué par une partie seulement de la patte repliée parallèlement à la face de la branche.

## Revendications

1. Circuit électrique (100) à au moins une bande découpée, notamment pour un ensemble de feux de signalisation de véhicule automobile, du type réalisé par découpage dans une tôle conductrice et comprenant des moyens pour la connexion électrique avec au moins un organe électrique tel qu'une lampe et au moins une languette mâle (111) destinée à coopérer avec un connecteur femelle pour l'alimentation électrique dudit organe, la languette étant réalisée dans la continuité d'une bande conductrice du circuit et comportant deux branches (112, 113) présentant chacune une face plane, les deux branches étant pliées à 180° avec les faces planes parallèles et en regard l'une de l'autre, au moins l'une des branches comportant une partie latérale (116) pliée perpendiculairement à la face plane pour être en saillie vers l'autre branche, cette partie présentant un sommet (118) en contact avec l'autre branche et constituant une butée lors du pliage des deux branches à 180° de manière à donner une épaisseur essentiellement constante à la languette (111), l'épaisseur maximale de la tôle au moins dans la région de la languette étant inférieure à la moitié de l'épaisseur nominale (e) de la languette, caractérisé en ce que les branches (112, 113) sont agencées de sorte que le sommet (118) de la partie latérale est en contact avec la face plane de l'autre branche.

2. Circuit électrique selon la revendication 1, caractérisé en ce que la partie latérale (116) a une dimension perpendiculairement à la face plane, une fois la partie latérale repliée, supérieure à deux fois l'épaisseur de la tôle dans la région de la languette.

3. Circuit électrique selon l'une quelconque des revendications 1 ou 2, caractérisé en ce que la partie latérale (116) est une patte s'étendant à partir d'un bord de la face plane, la patte ayant une dimension suivant ce bord inférieure à la dimension de cette face suivant ce bord.

4. Circuit électrique selon la revendication 3, caractérisé en ce que la languette (111) comporte au moins deux pattes latérales (116) ayant des faces s'étendant en regard l'une de l'autre une fois repliées.

5. Circuit électrique selon la revendication 4, caractérisé en ce que la languette comporte quatre pattes (116) latérales ayant des faces s'étendant deux à deux en regard l'une de l'autre une fois repliées.

6. Circuit électrique selon l'une quelconque des revendications 4 ou 5, caractérisé en ce que chaque branche (112, 113) comporte deux pattes latérales (116), les pattes de l'une des branches étant proches d'une extrémité libre de la languette une fois repliée et les pattes de l'autre branche étant distantes de cette extrémité libre.

7. Circuit électrique selon l'une quelconque des revendications 4 à 6, caractérisé en ce qu'au moins l'une des branches (112, 113) comporte deux pattes latérales (116) s'étendant symétriquement de part et d'autre de la branche.

8. Circuit électrique selon l'une quelconque des revendications 3 à 7, caractérisé en ce que, pour la ou chaque patte latérale, la branche associée présente deux fentes (117) s'étendant dans le prolongement de deux arêtes de la patte.

9. Ensemble de feux de signalisation de véhicule automobile, caractérisé en ce qu'il comprend un voyant et un circuit électrique à au moins une bande découpée selon l'une des revendications précédentes.

## Patentansprüche

1. Elektrische Schaltung (100) mit wenigstens einem gestanzten Band, insbesondere für eine Signalleuchteneinheit eines Kraftfahrzeugs, die durch Stanzen aus einem leitenden Blech ausgeführt ist und Mittel für den elektrischen Anschluß an wenigstens ein elektrisches Organ, etwa eine Lampe, und wenigstens eine Steckzunge (111) umfaßt, die dazu bestimmt ist, mit einer Anschlußbuchse für die Stromversorgung des besagten Organs zusammenzuwirken, wobei die Zunge im Zusammenhang eines leitenden Bands der Schaltung ausgeführt ist und zwei Schenkel (112, 113) umfaßt, die jeweils eine ebene Fläche aufweisen, wobei die beiden Schenkel um 180° mit den ebenen Flächen in paralleler und gegenüberliegender Anordnung gebogen sind, wobei wenigstens einer der Schenkel einen seitlichen Teil (116) umfaßt, der senkrecht zur ebenen Fläche gebogen ist, um zum anderen Schenkel hin vorzustehen, wobei dieser Teil einen Scheitel (118) in Kontakt mit dem anderen Schenkel aufweist, der einen Anschlag beim Biegen um 180° bildet, um der Zunge (111) eine im wesentlichen konstante Dicke zu geben, wobei die maximale Dicke des Blechs wenigstens im Bereich der Zunge kleiner als die halbe Nenndicke (e) der Zunge ist, **dadurch gekennzeichnet,** daß die Schenkel (112, 113) so angeordnet sind, daß der Scheitel (118) des seitlichen Teils mit der ebenen Fläche des anderen Schenkels in Kontakt steht.

2. Elektrische Schaltung nach Anspruch 1, **dadurch gekennzeichnet,** daß der seitliche Teil (116) eine zur ebenen Fläche senkrechte Abmessung im Anschluß an das Umbiegen des seitlichen Teils aufweist, die größer als die zweifache Dicke des Blechs im Bereich der Zunge ist.

3. Elektrische Schaltung nach einem der Ansprüche 1 oder 2, **dadurch gekennzeichnet,** daß der seitliche Teil (116) ein Ansatz ist, der sich von einem Rand der ebenen Fläche aus erstreckt, wobei der Ansatz eine Abmessung entlang diesem Rand aufweist, die kleiner als die Abmessung dieser Fläche entlang diesem Rand ist.

4. Elektrische Schaltung nach Anspruch 3, **dadurch gekennzeichnet,** daß die Zunge (111) wenigstens zwei seitliche Ansätze (115) mit Flächen umfaßt, die sich nach dem Umbiegen einander gegenüber erstrecken.

5. Elektrische Schaltung nach Anspruch 4, **dadurch gekennzeichnet,** daß die Zunge vier seitliche Ansätze (116) mit Flächen umfaßt, die sich nach dem Umbiegen paarweise einander gegenüber erstrecken.

6. Elektrische Schaltung nach einem der Ansprüche 4 oder 5, **dadurch gekennzeichnet,** daß jeder Schenkel (112, 113) zwei seitliche Ansätze (116) umfaßt, wobei sich die Ansätze eines der Schenkel nach dem Umbiegen in der Nähe eines freien Endes der Zunge befinden und die Ansätze des anderen Schenkels von diesem freien Ende entfernt sind.

7. Elektrische Schaltung nach einem der Ansprüche 4 bis 6, **dadurch gekennzeichnet,** daß wenigstens einer der Schenkel (112, 113) zwei seitliche Ansätze (116) umfaßt, die sich symmetrisch beiderseits des Schenkels erstrecken.

8. Elektrische Schaltung nach einem der Ansprüche 3 bis 7, **dadurch gekennzeichnet,** daß der zugehörige Schenkel für den oder jeden seitlichen Ansatz zwei Schlitze (117) aufweist, die sich in der Verlängerung von zwei Kanten des Ansatzes erstrecken.

9. Signalleuchteneinheit eines Kraftfahrzeugs, **dadurch gekennzeichnet,** daß sie eine Abdeckscheibe und eine elektrische Schaltung mit wenigstens einem gestanzten Band nach einem der vorangehenden Ansprüche umfaßt.

## Claims

1. Electrical circuit (100) with at least one cropped strip, notably for a set of motor vehicle indicator lights, of the type produced by cropping from a conductive metal sheet and comprising means for electrical connection with at least one electrical component such as a lamp and at least one male tongue (111) intended to cooperate with a female connector for the electrical supply of the said component, the tongue being produced in the continuity of a conductive strip of the circuit and having two branches (112, 113) each having a plane face, the two branches being folded at 180° with the plane faces parallel and opposite each other, at least one of the branches have a lateral part (116) folded perpendicularly to the plane face in order to project towards the other branch, this part having a top (118) in contact with the other branch and constituting a stop when the two branches are folded at 180° so as to give an essentially constant thickness to the tongue (111), the maximum thickness of the metal sheet at least in the region of the tongue being less than half the nominal thickness (e) of the tongue, characterised in that the branches (112, 113) are arranged so that the top (118) of the lateral part is in contact with the plane face of the other branch.

2. Electrical circuit according to Claim 1, characterised in that the lateral part (116) has a dimension perpendicular to the plane face, once the lateral part has been folded, greater than twice the thickness of the metal sheet in the region of the tongue.

3. Electrical circuit according to either one of Claims 1 or 2, characterised in that the lateral part (116) is a lug extending from one edge of the plane face, the lug having a dimension along this edge less than the dimension of this face along this edge.

4. Electrical circuit according to Claim 3, characterised in that the tongue (111) has at least two lateral lugs (116) having faces extending opposite each other once folded.

5. Electrical circuit according to Claim 4, characterised in that the tongue has four lateral lugs (116) having faces extending in pairs opposite each other once folded.

6. Electrical circuit according to either one of Claims 4 or 5, characterised in that each branch (112, 113) has two lateral lugs (116), the lugs on one of the branches being close to a free end of the tongue once folded and the lugs on the other branch being distant from this free end.

7. Electrical circuit according to any one of Claims 4 to 6, characterised in that at least one of the branches (112, 113) has two lateral lugs (116) extending symmetrically on each side of the branch.

8. Electrical circuit according to any one of Claims 3 to 7, characterised in that, for the lateral lug or lugs, the associated branch has two slots (117) extending in line with two edges of the lug.

9. Set of motor vehicle indicator lights, characterised in that it comprises an indicator and an electrical circuit with at least one cropped strip according to one of the preceding claims.
